# EUROPEAN PATENT SPECIFICATION

(11) **EP 2 919 632 B1**
(45) Date of publication and mention of the grant of the patent: **19.06.2019**
(21) Application number: 13791921.3
(22) Date of filing: 08.11.2013
(51) Int. Cl.: A47J 43/14, B65G 37/00, B65G 43/10

(54) **A METHOD FOR FEEDING EGGS TO AN EGG BREAKING APPARATUS AND AN EGG BREAKING APPARATUS**
VERFAHREN ZUR ZUFÜHRUNG VON EIERN ZU EINER EIÖFFNUNGSVORRICHTUNG UND VORRICHTUNG ZUM ÖFFNEN VON EIERN
PROCÉDÉ POUR ACHEMINER DES OEUFS À UN APPAREIL DE DÉCOQUILLAGE ET APPAREIL DE DÉCOQUILLAGE

(30) Priority: 13.11.2012 DK 201270697
(43) Date of publication of application: 23.09.2015
(73) Proprietor: Sanovo Technology A/S, 5210 Odense NV (DK)
(72) Inventor: HOLST, Jan Holm, 5270 Odense N (DK); KRISTENSEN, Jens Kristian Sønderby, 5220 Odense S (DK)
(74) Representative: AWA Denmark A/S
(86) International application number: PCT/DK2013/050368
(87) International publication number: WO 2014/075683

(56) References cited:
- WO-A1-2007/095942
- WO-A1-2007/095943
- DE-A1- 1 913 861

## Description

The present invention relates to a method for feeding eggs to an egg breaking apparatus, where eggs are fed to a plurality of egg breaking devices by a shell egg in-feed conveyor having a first end, where eggs are delivered to the shell egg in-feed conveyor, and a second end, where eggs are allowed to continue off the conveyor for transfer to the egg breaking devices, each egg breaking device receiving one egg at a time and all egg breaking devices being mounted on a egg breaking conveyor, where the egg breaking devices are moved in relation to the shell egg in-feed conveyor in a first direction following a substantially vertical first axis near the second end of the shell egg in-feed conveyor. In a second aspect, the present invention relates to an egg breaking apparatus with a plurality of egg breaking devices and a shell egg in-feed conveyor.

With such methods and apparatuses it is currently possible to process more than 200000 eggs per hour when eighteen eggs are delivered to the egg breaking devices at a time. This means that more than 50 eggs pass over the second end of the shell egg in-feed conveyor every second.

When processing eggs at such high speeds the risk of eggs not being caught correctly is relatively high. This may result in the egg being dropped, in the egg shell breaking when the eggs lands on the egg breaking device or in the egg coming to lie with an inexpedient orientation in the egg breaking device. The first situation results in the egg being lost entirely, whereas the second situation may also result in the egg product being polluted with shell fragments. In the last situation the egg breaking device may not be able to break the egg and the whole egg will then be dumped in the egg shell receptacle.

This problem has been alleviated with the egg breaking apparatus and method described in WO2007/095943, where the egg breaking devices are tilted in a direction opposite the running direction of the egg breaking conveyor to compensate for the fact that the egg breaking devices are travelling at a higher speed than the eggs coming off the shell egg in-feed conveyor.

However, as the running speed of the egg breaking apparatus sometimes changes, for example due to the supply of eggs decreasing or increasing or due to changes in the quality of the eggs, the tilt cannot always compensate fully. When running at moderate speed this is normally not a problem, but as there is a perpetual demand for even faster egg breaking processes, there is a need for a method and apparatus which allows an even more precise transfer of the eggs from the shell egg in-feed conveyor to the egg breaking devices.

This object is met with a method where the shell egg in-feed conveyor is driven by a first drive and the egg breaking conveyor is driven by a second drive, and where the position of the first drive and/or the position of the second drive is adjusted in response to changes in the speed of at least one of the shell egg in-feed conveyor and the egg breaking conveyor. Usually the position of the first drive will be adjusted in response to changes in the speed of the egg breaking conveyor, while the position of the second drive will be adjusted in response to changes in the speed of the shell egg in-feed conveyor.

In the methods and apparatuses available today the shell egg in-feed conveyor and egg breaking conveyor are driven by one and the same drive, typically an electro motor. A change of the speed of the actual egg breaking process, i.e. the speed of the egg breaking conveyor, therefore also results in a change of the speed of the shell egg in-feed conveyor. If, when seen in the conveying direction, the distance between the egg breaking devices and the eggs on the shell egg in-feed conveyor were the same, this would be of no consequence, but this is normally not the case. A change of speed therefore also results in the egg feeding coming slightly out of phase with the egg breaking devices. When the speed is increased in comparison to the original setting of the apparatus, this results in the eggs experiencing a free fall when coming off the second end of the shell egg in-feed conveyor, before they are caught by the egg breaking devices. Similarly a reduction of the speed will result in the egg leaving the shell egg in-feed conveyor prematurely, which may result in the egg not being caught by the egg breaking device or hitting its front edge. Adjusting the position of one or both of the drives brings the two conveyors back into phase and hence eliminates these disadvantages.

Previously such a slight asynchrony between the two conveyors was considered to be of no consequence, but by filming the egg transfer process with a high speed camera it has been proven that the risk of eggs being caught incorrectly is considerably reduced and the productivity of egg breaking process increased with the adjustment of the position of the first drive.

The adjustment of the first drive and/or second drive can be performed by a control unit to which input data may be given manually, but it is preferred that the control unit performs the adjustment(s) automatically. In a preferred embodiment, the control unit receives information on the positions of both the first drive and the second drive, the need for adjustment of one or both of the drives is calculated by the control unit based on this information, and whenever an adjustment is needed the control unit sends control signals to the drive or drives in question. This may for example be done by programming the control unit with a virtual model of the egg breaking apparatus. Such a virtual model may also be used for presenting the state of running of the apparatus to an operator in a manner, which is easy to comprehend.

The information about the position of the drives is preferably determined by encoders on the drive motors, which provides this input to the control unit for use in calculating the adjustment of the first drive and/or the second drive.

Alternatively or as a supplement, input from sensors arranged on chains and/or belts transmitting force from the first drive to the shell egg in-feed conveyor and/or from the second drive to the egg breaking conveyor, respectively, may be used for the adjustment of the first drive and/or the second drive. In the simplest form, the sensor is a position sensor detecting the arrival of a certain point on the chain or belt to a predetermined position in the apparatus. One example is a photocell illuminated by a light beam, which is broken by a projection on the chain or belt of the egg breaking conveyor, but an electromagnetic proximity sensor may also be employed. Another and currently preferred alternative is to use the inductive sensors, incremental encoders or the like, which are already found on many egg breaking apparatuses and which generates a signal every time a new egg breaking device is moved into a predetermined detection position.

When using a chain or belt with a limited slack any position on the chain or belt may in principle be used for determining the position of the motor driving it, but positional information coming directly from the motor is generally more precise and therefore preferred.

The control unit preferably includes a computer programmed for calculating position adjustments and a communication unit adapted for communicating with the first drive and/or the second drive, said communication unit possibly being an integrated part of the computer. If the computer is further adapted for receiving input from encoders on drive motor and/or sensors in the egg breaking apparatus, this allows for a fully automated control of the egg breaking apparatus.

In principle, it is sufficient to adjust the position of one drive whenever the speed of the other drive is changed considerably to achieve the advantages of the invention. It is, however, preferred to monitor the position of both drives in relation to each other, so as to determine which drive should be adjusted or if both drives should be adjusted to achieve the most efficient running of the apparatus. Also it is preferred to monitor of one or both drives regularly or continuously and to adjust the position of one or both drives regularly or continuously when the egg breaking apparatus is running. In this way it is possible to compensate even for small changes in the processing speed, which, depending on the type of motor used, may potentially result from variations in for example the power supplied to the drive(s) or the loads affecting it/them. Normally, however, most adjustment will be determined by deliberate changes in the processing speed, an example being that it is sometimes necessary to lower the speed when handling lower grade eggs with relatively weak shells. Such a change of speed may be performed manually or the system may be adapted for automatically lowering the speed if the quality of the egg product reaches a predetermined lower threshold. Such a threshold could for example be defined by the percentage of eggs, where the yolk is broken during the breaking process.

Another factor, which may justify an adjustment of the position of one or both drives is the size and/or size variation of the eggs fed to the egg breaking apparatus. The control unit is therefore preferably adapted for receiving information about the size and/or size variation of the eggs fed to the egg breaking apparatus and for taking this information input into account in the adjustment of the position of the first drive and/or second drive. If having processed relatively large eggs and changing to processing relatively small eggs, for example if starting to receive eggs from another laying house, a small adjustment may compensate for the decreased size. These size difference and variations are of course small compared to the dimensions of the apparatus, but when running at very high speed even the smallest increase in productivity will sum up to a considerably advantage when seen over time. The information on the size and/or size variation may be obtained from a scanner arranged in connection with the shell egg in-feed conveyor.

Traditionally egg breaking apparatuses have been driven by means of electro motors, which are both cheap and reliable. Currently it is preferred to use servo motors, such as stepper motors, or any other motor capable of running in a servo mode for the first drive and/or second drive, since these are by nature easy to adjust with regards to position. The motor used for the first drive will usually be somewhat smaller than the motor used for the second drive due to the differences in loads, but they may be identical.

The tilting motion described in WO2007/095943 is preferably also included in the method, meaning that when near a position at the shell egg in-feed conveyor, the egg breaking devices are tilted about a second axis, which is substantially perpendicular to the first axis and to the transport direction of the shell egg in-feed conveyor, in a second direction substantially opposite to said first direction, preferably with a speed corresponding substantially to the difference between the speed of the eggs coming off the shell egg in-feed conveyor and the speed of egg breaking conveyor. This tilting of the egg breaking device is preferably performed substantially simultaneously with the receipt of an egg from the shell egg in-feed conveyor.

In the following, examples of embodiments of the invention will be described in further detail with reference to the accompanying drawing. In the drawing:
Fig. 1 is a schematic side-view of an egg breaking apparatus according to an aspect of the invention,
Fig. 2 is a schematic perspective view of the egg breaking apparatus according to Fig. 1, where cover plates and other parts have been removed for the sake of simplicity,
Fig. 3 schematically depicts a detail of the egg breaking apparatus in Fig. 2, and
Figs 4-7 are a series of sketches showing different steps in the transfer of an egg from a shell egg in-feed conveyor to an egg breaking device in an egg breaking apparatus as the one in Figs 2 and 3.

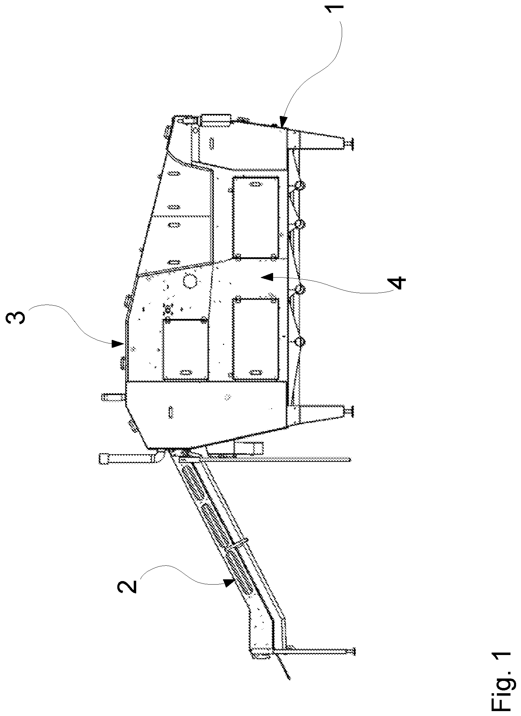

An egg breaking apparatus according to the invention may be embodied as shown in the Figs 1-3.

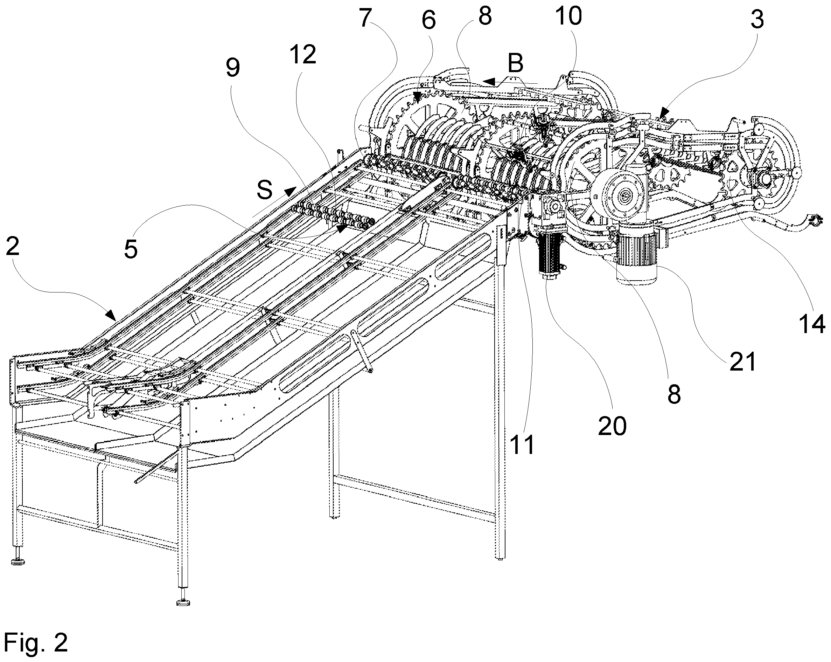

The egg breaking apparatus 1 comprises an egg feeding section 2, an egg breaking section 3 and an egg receiving section 4. The egg breaking section and egg receiving sections are included in a breaker unit and are not discernible in Fig. 1 due to cover plates covering the entire unit. The egg feeding section 2 and the egg breaking section 3 are schematically shown in more detail in Fig. 2.

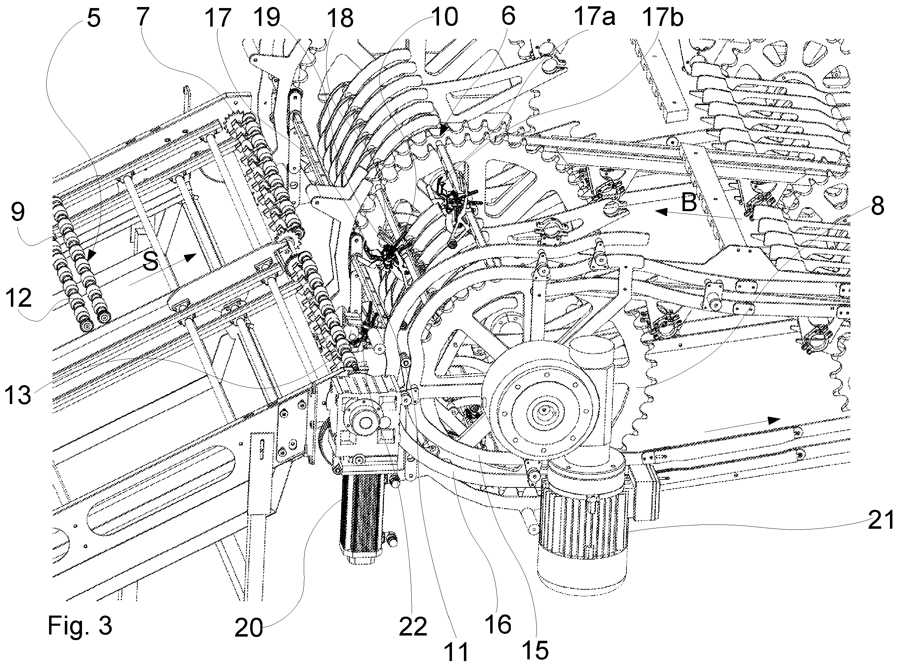

The egg feeding section 2 comprises a shell egg in-feed conveyor 5, here in the form a plurality of rollers 9 arranged perpendicularly to the conveying direction, which is indicated by the arrows S in Figs 2 and 3. Here, for the sake of simplicity, only a few rollers are shown, but it is to be understood that they are evenly spaced along the entire feeding section 2 and forming the conveying surface of the shell egg in-feed conveyor. Depressions 12 in the rollers form pockets each suitable for carrying one shell egg 13. The number of pockets across the shell egg in-feed conveyor defining egg positions and corresponding in number to the number of egg breaking devices in a column across the apparatus as will be described later, here nine on each of the two sets of rollers or eighteen in total.

In the embodiment shown force is transmitted to the shell egg in-feed conveyor 5 by means of feeder chains (not shown) running over toothed turn-ing wheels 7 in a manner well known to the skilled person and it is to be understood that though not shown in Fig. 2, similar turning wheels are provided at the opposite end of the egg feeding section. Likewise, the egg breaking conveyor 6 includes a breaker chain mounted on toothed turning wheels 8 and 14. Although use in this embodiment is made of chains and toothed wheels, other alternatives are conceivable, such as toothed belts and wheels or drive belts and pulleys or combinations thereof. In the embodiment shown four chains are used on each conveyor, but a higher or lower number of chains and corresponding number of wheels are possible.

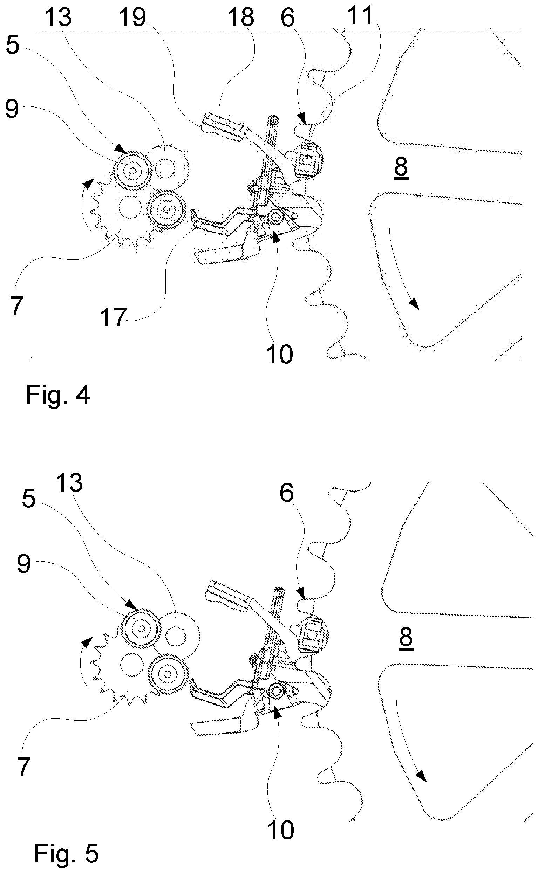

The turning wheels 7 of the shell egg in-feed conveyor 5 rotate clockwise so that the rollers 9 and hence also the eggs 13 are carried towards the egg breaking section 3, where the turning wheels 8 and 14 give the egg breaking conveyor 6 the running direction indicated by the arrows B in Figs 2 and 3. The actual transfer of eggs 13 to the egg breaking devices 10 will be elaborated below with reference to Figs. 4-7.

The shell egg in-feed conveyor 5 is driven by a first motor 20, and the egg breaking conveyor 6 is driven by a second motor 21.

As for the shell egg in-feed conveyors the chain of the egg breaking conveyor 6 carries a plurality of horizontal bars 11 on which egg breaking devices 10 are mounted. In Figs 2 and 3 only a single egg breaking device 10 is shown on each horizontal bar for the sake of simplicity, but the holes 13 in the bars indicate positions where like egg breaking devices will be mounted. Each of these devices thus represents a column of devices extending perpendicularly to the plane of movement of the egg breaking conveyor 6, each column including the same number of egg breaking devices as the number of egg positions across the shell egg in-feed conveyor 5, here eighteen. Likewise it is to be understood that horizontal bars 11 and egg breaking devices 10 are evenly spaced on the conveyor and that the three egg breaking devices shown in Fig. 3 represents a row of egg breaking devices extending over the entire length of the egg breaking conveyor 6.

As may be seen in Fig. 3, the egg breaking section 3 includes a system of rails 15, 16, which is for guiding the horizontal bars 11 and the egg breaking devices 10 to follow a track, which deviates from the natural path of the chain conveyor 6. This track assists in obtaining as smooth a transfer as possible from the shell egg in-feed conveyor to the egg breaking devices.

The actual breaking of the eggs 13 takes place downstream of the transfer point, i.e. when the egg breaking devices are travelling on the lower run or underside of the egg breaking conveyor 6.

Referring now also to Figs 4-7, each egg breaking device 10 comprises a lower holding part 17 and an upper retaining part 18. The holding part 17 is split in two 17a, 17b to give room for a knife part (not visible) between them. The retaining part 18 is moveable in relation to the holding part 17 between a receiving position (shown in Fig. 4) and a retaining position (not shown), where it is in contact with the egg to keep it in place during breaking. When passing the end of the shell egg in-feed conveyor 5 for receiving an egg 13, the two holding parts 17a, 17b are close together as shown in Fig. 3.

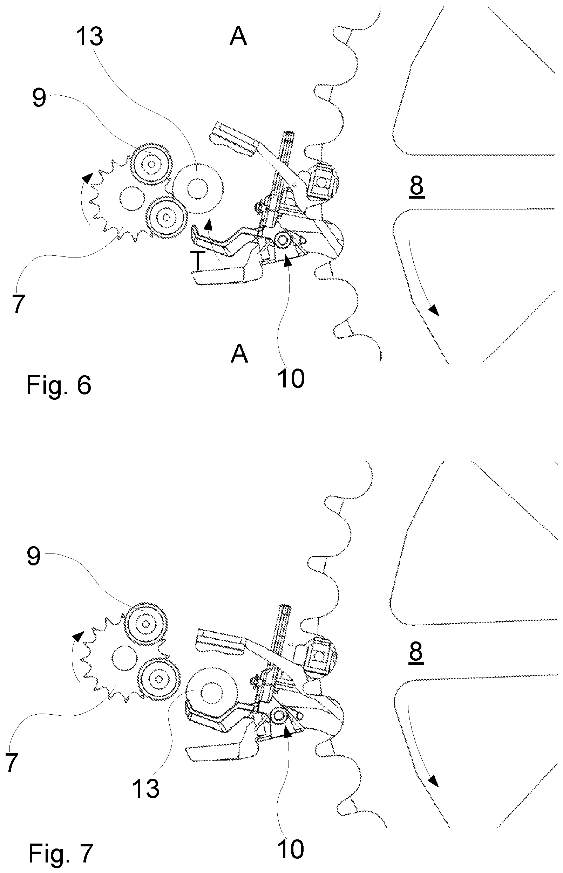

In the transfer zone the egg 13 rolls of the rollers 9 and hence changes from a substantially horizontal movement to a substantially vertical movement under the influence of gravity. The egg breaking device 10 moves essentially along a vertical axis A (see Fig. 6) and when properly adjusted this results in the egg effectively rolling directly of the shell egg in-feed conveyor 5 and into the egg breaking device 10.

In the shown embodiment, the distance between adjacent egg breaking devices 10 is larger than the distance between the egg positions defined by the depressions 12 in the rollers 9. Hence, in order to ensure that all egg breaking devices meet an egg feeding device and vice versa at the transfer point, the speed of the egg breaking conveyor 6 is larger than the speed of the shell egg in-feed conveyor 5. Accordingly, the transfer will result in the egg experiencing a sudden acceleration and to compensate for this the holding part 17, which is initially substantially horizontal, possibly with a slight positive inclination as shown in Fig. 4, may be tilted upwards as indicated by the arrow T in Fig. 6 to a tilted position shown in Fig. 7, when passing the end of the shell egg in-feeding conveyor 5 at the transfer point. In the embodiment shown, the entire egg breaking device 10 is tilted approximately 10 degrees upwards, but this angle may vary depending on different system requirements. Alternatively, a separate part of the egg breaking device intended for receiving the egg may be rotatable independently of the rest, but such an independent part should preferably be connected to the rest of the egg breaking device in a manner allowing mounting, replacement etc. as one unit.

Reference is made to WO 2007/095942 or WO 2007/095943 for a more elaborate description of the egg breaking devices and the actual egg breaking process.

This tilting described in WO 2007/095943 is able to compensate for the acceleration of the egg, but does not take account of the effects of changing the speeds of both conveyors to change the processing speed, which may for example be necessary to adapt to changes in demand, supply or egg quality.

When the egg breaking apparatus is started the shell egg in-feed conveyor 5 and the egg breaking conveyer 6 are initially adjusted in relation to each other by a so-called idling operation, where both conveyors are driven slowly forward to a predetermined position. This predetermined position is usually found by arranging different kinds of the electric or mechanical homing sensors in the apparatus.

The predetermined positions of the two conveyors 5,6 have traditionally been set in accordance with the intended running speed of the apparatus. However, when changing the processing speed, the differences in the speed of the two conveyors, which is a necessity due to the differences in the distance between the rollers 9 and the egg breaking devices 10, results in the rollers and egg receiving devices coming slightly our of phase and hence the transfer of the egg is no longer as smooth as in Figs. 4-7.

Traditionally the setting of the apparatus has simply been in correspondence with the slowest processing speed, the optimal mutual position of the two conveyors simply being determined by tests.

With the method according to the present invention on the other hand, the speeds of the two conveyors are not only changed, the position of at least one of the drive motors 20,21 is also adjusted to eliminated the asynchrony. This makes it possible to achieve a seemingly small increase in productivity, but with high speeds and/or volumes this effect is not trivial.

In a simple embodiment, only the position of one drive motor, such as the motor 20 driving the shell egg in-feed conveyor 5, is adjusted so that two conveyors come back into the intended mutual phase, but it is preferred that the position of both motors can be adjusted.

Many commercially available motors are provided with encoders allowing their current position to the determined and the when using a servomotor, it is relatively easy to adjust its position. Information from the encoders is preferably sent to a control unit in the form of a computer in a manner known per se by the skilled person.

The position adjustment may be achieved by taking the motor one or more steps forward or backwards or by accelerating or decelerating for a short period of time to gradually re-establish the intended mutual position of the rollers 9 and egg breaking devices 10 at the point of transfer.

Although a servomotor is used in the embodiment depicted and described above, other types of motors may be used in other embodiments. This also includes can driven systems, where the conveyor is moved in an alternating manner, for example following a sinus pattern.

The actual controlling of the drive motors 20,21 to change the positions of one or both of them is preferably performed by a computer serving as a control unit (not shown). The control unit receives input from encoders or sensors on the position of shell egg in-feed conveyor 5 and egg breaking conveyor 6, calculates the new optimal positions of the motors, and sends control signals to the motor(s), but it is of course also possible to perform one or more of these steps manually.

When using a fully automated system, it is preferred to perform the calculation of potentially needed adjustment continuously or at regular predetermined intervals, but it is also within the scope of the invention to only perform an adjustment when the speed of one or more of the conveyors 5,6 actually changes. Sensors in the egg breaking apparatus may be used for detecting such speed changes independently of the motors.

Above the need for adjustment of the positions of the motors has been described with reference to changes in the speed of the conveyors 5,6, which may for example be determined by the quality of the eggs. Eggs having a relatively thin shell will break easier and when processing such eggs it may therefore be necessary to decrease the processing speed and/or to adjust the positions even more carefully. Another factor, which may be taken into account when determining the optimal mutual positions and the need for adjustment, is the size and variation in size of the eggs being supplied to the egg breaking apparatus 1. If the eggs are very large the optimal setting will be slightly different than when the eggs are very small and if variation is large. The control unit should therefore preferably be equipped to receive such information about the eggs 13, which may come from a scanner (not shown) arranged in connection with the egg feeding section 2, and programmed to include such input in the calculation of the need for adjustment when ever available.

In this text the terms "phase" and "asynchrony" has been used to describe the mutual positional relationship between the rollers 9 of the shell egg in-feed conveyor 5 and the egg breaking devices 10 on the egg breaking conveyor 6, even though these need not be in phase or run synchronously in the strict literal sense of the words. Expressions such as "out of phase" should therefore only be interpreted as an indication of deviation from the optimal mutual position.

With regards to the determination of positions it is noted that such a determination may be determined either by determining the position of the motor, for example by means of an encoder, or by determining the position of a predetermined point in the system, for example the position of one of the rollers 9 or egg breaking devices 10. These two methods have different advantages and it may therefore be expedient to use a combination. A comparison of such different determinations of positions within the same system may for example be used compensating for slack in chains or belts or for variations caused by temperature changes.

It is to be understood, that the preferred embodiments of the invention described in the above are not to be seen as limiting the scope of the invention. Rather, a person skilled in the art will be able to conceive a number of modifications and combinations of the features described above, which will fall under the scope of invention as defined by the claims.

## Claims

1. A method for feeding eggs to an egg breaking apparatus (1), where eggs are fed to a plurality of egg breaking devices (10) by a shell egg in-feed conveyor (5) having a first end, where eggs are delivered to the shell egg in-feed conveyor, and a second end, where eggs are allowed to continue off the conveyor for transfer to the egg breaking devices, each egg breaking device receiving one egg at a time and all egg breaking devices being mounted on an egg breaking conveyor (6), where the egg breaking devices are moved in relation to the shell egg in-feed conveyor in a first direction following a substantially vertical first axis (A) near the second end of the shell egg in-feed conveyor, **characterized in that**
the shell egg in-feed conveyor (5) is driven by a first drive and the egg breaking conveyor (6) is driven by a second drive, and that the position of the first drive and/or the position of the second drive is adjusted in response to changes in the speed of at least one of the shell egg in-feed conveyor and the egg breaking conveyor.

2. A method according to claim 1, **characterized in that** the adjustment of the first drive and/or the second drive is performed automatically by a control unit.

3. A method according to claim 2, **characterized in that** the control unit receives information on the positions of both the first drive and the second drive, that the need for adjustment of one or both of the drives is calculated by the control unit based on this information, and that, if an adjustment is needed, the control unit sends control signals to the first drive and/or second drive.

4. A method according to any of the preceding claims, **characterized in that** input from encoders on one or more drive motors (20,21) is used for the adjustment of the first drive and/or the second drive.

5. A method according to any of the preceding claims, **characterized in that** input from sensors arranged on chains and/or belts transmitting force from the first drive to the shell egg in-feed conveyor (5) and/or from the second drive to the egg breaking conveyor (6), respectively, is used for the adjustment of the first drive and/or the second drive.

6. A method according to any of the preceding claims, **characterized in that** the adjustment of the position of one or both drives is performed regularly or continuously, when the egg breaking apparatus (1) is running.

7. A method according to any of the preceding claims, **characterized in that** the size and/or size variation of the eggs fed to the egg breaking apparatus (1) is taken into account in the adjustment of the position of the first drive and/or second drive.

8. A method according to any of the preceding claims, **characterized in that** the first drive and/or second drive comprises a servo motor or a motor driven in servo mode.

9. A method according to any of the preceding claims, **characterized in that** when near a position at the shell egg in-feed conveyor (5), the egg breaking devices (10) are tilted about a second axis, which is substantially perpendicular to the first axis (A) and to the transport direction (S) of the shell egg in-feed conveyor, in a second direction substantially opposite to said first direction, preferably with a speed corresponding substantially to the difference between the speed of the eggs coming off the shell egg in-feed conveyor (5) and the speed of egg breaking conveyor (6).

10. A method according to claim 9, **characterized in that** the tilting of an egg breaking device (10) is performed substantially simultaneously with the receipt of an egg from the shell egg in-feed conveyor (5).

11. An egg breaking apparatus (1), comprising
a plurality of egg breaking devices (10), each capable of receiving one egg at a time and all being mounted on an egg breaking conveyor (6),
a shell egg in-feed conveyor (5) for feeding eggs to the egg breaking devices, said shell egg in-feed conveyor having a first end and a second end opposite the first end in the direction (S) of transport of the shell egg in-feed conveyor, where eggs can continue off the shell egg in-feed conveyor for transfer to the egg breaking devices,
at least one egg receiving device,
where the egg breaking devices are movable in relation to the shell egg in-feed conveyor in a first direction following a substantially vertical first axis near the second end of the shell egg in-feed conveyor,
**characterized in that**
it further comprises a first drive adapted for driving the shell egg in-feed conveyor (5), a second drive adapted for driving the egg breaking conveyor (6), and a control unit for adjusting the position of the first drive and/or the position of the second drive in response to changes in the speed of at least one of the shell egg in-feed conveyor and the egg breaking conveyor.

12. An egg breaking apparatus according to claim 11, **characterized in that** at least one motor (20,21) of the first drive and/or the second drive is provided with an encoder and that the control unit is adapted for receiving information on the position of the motor from the encoder and for using this information for adjusting the position of the other drive.

13. An egg breaking apparatus according to claim 11 or 12, **characterized in that** the control unit includes a computer programmed for calculating position adjustments and a communication unit adapted for communicating with the first drive and/or the second drive.

14. An egg breaking apparatus according to any of claims 11-13, **characterized in that** the control unit is adapted for receiving information about the size and/or size variation of the eggs fed to the egg breaking apparatus and for taking this information into account in the adjustment of the position of the first drive and/or the second drive.

15. An egg breaking apparatus according to any of claims 11-14, **characterized in that** the first drive and/or the second drive is a servo motor or a motor driven in servo mode.

## Patentansprüche

1. Verfahren zur Zuführung von Eiern zu einer Eiöffnungseinrichtung (1), wobei Eier über einen Schaleneizufuhrförderer (5), ein erstes Ende, an dem Eier zum Schaleneizufuhrförderer geliefert werden, und ein zweites Ende, an dem Eier außerhalb des Förderers für einen Transfer zu den Eiöffnungsvorrichtungen fortfahren können, aufweisend, zu mehreren Eiöffnungsvorrichtungen (10) zugeführt werden, wobei jede Eiöffnungsvorrichtung die Eier einzeln nacheinander aufnimmt und alle Eiöffnungsvorrichtungen an einem Eiöffnungsförderer (6) montiert sind, wobei die Eiöffnungsvorrichtungen in Relation zum Schaleneizufuhrförderer in eine erste Richtung, einer im Wesentlichen vertikalen ersten Achse (A) nahe dem zweiten Ende des Schaleneizufuhrförderers folgend, bewegt werden, **dadurch gekennzeichnet, dass** der Schaleneizufuhrförderer (5) durch einen ersten Antrieb angetrieben wird und der Eiöffnungsförderer (6) durch einen zweiten Antrieb angetrieben wird und dass die Position des ersten Antriebs und/oder die Position des zweiten Antriebs in Reaktion auf Änderungen in der Geschwindigkeit von mindestens einem des Schaleneizufuhrförderers und des Eiöffnungsförderers eingestellt wird.

2. Verfahren nach Anspruch 1, **dadurch gekennzeichnet, dass** die Einstellung des ersten Antriebs und/oder des zweiten Antriebs durch eine Steuereinheit automatisch durchgeführt wird.

3. Verfahren nach Anspruch 2, **dadurch gekennzeichnet, dass** die Steuereinheit Informationen zu den Positionen sowohl des ersten Antriebs als auch des zweiten Antriebs empfängt, dass die Notwendigkeit zur Einstellung eines der beiden oder beider Antriebe durch die Steuereinheit basierend auf diesen Informationen berechnet wird und dass, wenn eine Einstellung erforderlich ist, die Steuereinheit Steuersignale an den ersten Antrieb und/oder an den zweiten Antrieb sendet.

4. Verfahren nach einem der vorhergehenden Ansprüche, **dadurch gekennzeichnet, dass** ein Eingang von Gebern an einem oder mehreren Antriebsmotoren (20,21) für die Einstellung des ersten Antriebs und/oder des zweiten Antriebs verwendet wird.

5. Verfahren nach einem der vorhergehenden Ansprüche, **dadurch gekennzeichnet, dass** ein Eingang von den Sensoren, die an Ketten und/oder Riemen angeordnet sind, über die Kraft vom ersten Antrieb zum Schaleneizufuhrförderer (5) bzw. vom zweiten Antrieb zum Eiöffnungsförderer (6) übertragen wird, für die Einstellung des ersten Antriebs und/oder des zweiten Antriebs verwendet wird.

6. Verfahren nach einem der vorhergehenden Ansprüche, **dadurch gekennzeichnet, dass** die Einstellung der Position von einem der beiden oder beiden Antrieben regelmäßig oder kontinuierlich durchgeführt wird, wenn die Eiöffnungseinrichtung (1) in Betrieb ist.

7. Verfahren nach einem der vorhergehenden Ansprüche, **dadurch gekennzeichnet, dass** die Größe und/oder die Größenabweichung der der Eiöffnungseinrichtung (1) zugeführten Eier bei der Einstellung der Position des ersten Antriebs und/oder des zweiten Antriebs berücksichtigt wird.

8. Verfahren nach einem der vorhergehenden Ansprüche, **dadurch gekennzeichnet, dass** der erste Antrieb und/oder der zweite Antrieb einen Servomotor oder einen im Servomodus angetriebenen Motor umfasst.

9. Verfahren nach einem der vorhergehenden Ansprüche, **dadurch gekennzeichnet, dass**, wenn sie nahe einer Position am Schaleneizufuhrförderer (5) sind, die Eiöffnungsvorrichtungen (10) um eine zweite Achse, die im Wesentlichen senkrecht zur ersten Achse (A) und zur Transportrichtung (S) des Schaleneizufuhrförderers ist, in eine zweite Richtung gekippt werden, die im Wesentlichen der ersten Richtung entgegengesetzt ist, vorzugsweise mit einer Geschwindigkeit, die im Wesentlichen der Differenz zwischen der Geschwindigkeit der Eier, die vom Schaleneizufuhrförderer (5) kommen, und der Geschwindigkeit des Eiöffnungsförderers (6) entspricht.

10. Verfahren nach Anspruch 9, **dadurch gekennzeichnet, dass** das Kippen einer Eiöffnungsvorrichtung (10) im Wesentlichen gleichzeitig mit der Aufnahme eines Eies vom Schaleneizufuhrförderer (5) durchgeführt wird.

11. Eiöffnungseinrichtung (1), die Folgendes umfasst mehrere Eiöffnungsvorrichtungen (10), jede in der Lage, Eier einzeln und nacheinander aufzunehmen, und alle an einem Eiöffnungsförderer (6) montiert,
einen Schaleneizufuhrförderer (5) zum Zuführen von Eiern zu den Eiöffnungsvorrichtungen, wobei der Schaleneizufuhrförderer ein erstes Ende und ein dem ersten Ende in Richtung (S) des Transports des Schaleneizufuhrförderers gegenüberliegendes zweites Ende hat, an dem Eier außerhalb des Schaleneizufuhrförderers für einen Transfer zu den Eiöffnungsvorrichtungen fortfahren können,
zumindest eine Eiaufnahmevorrichtung,
wobei die Eiöffnungsvorrichtungen in Relation zum Schaleneizufuhrförderer in eine erste Richtung, einer im Wesentlichen vertikalen ersten Achse nahe dem zweiten Ende des Schaleneizufuhrförderers folgend, bewegbar sind,
**dadurch gekennzeichnet, dass**
sie ferner einen ersten Antrieb, angepasst zum Antreiben des Schaleneizufuhrförderers (5), einen zweiten Antrieb, angepasst zum Antreiben des Eiöffnungsförderers (6) und eine Steuereinheit zum Einstellen der Position des ersten Antriebs und/oder der Position des zweiten Antriebs in Reaktion auf Änderungen in der Geschwindigkeit von mindestens einem des Schaleneizufuhrförderers und des Eiöffnungsförderers umfasst.

12. Eiöffnungseinrichtung nach Anspruch 11, **dadurch gekennzeichnet, dass** zumindest ein Motor (20,21) des ersten Antriebs und/oder des zweiten Antriebs mit einem Geber versehen ist und dass die Steuereinheit zum Empfangen von Informationen zur Position des Motors vom Geber und zum Verwenden dieser Informationen zum Einstellen der Position des anderen Antriebs angepasst ist.

13. Eiöffnungseinrichtung nach Anspruch 11 oder 12, **dadurch gekennzeichnet, dass** die Steuereinheit einen Computer, programmiert zum Berechnen von Positionseinstellungen, und eine Kommunikationseinheit, angepasst zum Kommunizieren mit dem ersten Antrieb und/oder dem zweiten Antrieb, umfasst.

14. Eiöffnungseinrichtung nach einem der Ansprüche 11-13, **dadurch gekennzeichnet, dass** die Steuereinheit angepasst ist zum Empfangen von Informationen über die Größe und/oder die Größenabweichung der der Eiöffnungseinrichtung zugeführten Eier und zum Berücksichtigen dieser Informationen bei der Einstellung der Position des ersten Antriebs und/oder des zweiten Antriebs.

15. Eiöffnungseinrichtung nach einem der Ansprüche 11-14, **dadurch gekennzeichnet, dass** der erste Antrieb und/oder der zweite Antrieb ein Servomotor oder ein im Servomodus angetriebener Motor ist.

## Revendications

1. Procédé pour acheminer des oeufs jusqu'à un appareil de décoquillage (1), dans lequel des oeufs sont conduits à une pluralité de dispositifs de décoquillage (10) par un convoyeur d'alimentation d'oeufs en coquille (5) présentant une première extrémité, à laquelle des oeufs sont délivrés au convoyeur d'alimentation d'oeufs en coquille, et une seconde extrémité, à laquelle des oeufs sont autorisés à avancer au-delà du convoyeur pour être transférés aux dispositifs de décoquillage, chaque dispositif de décoquillage recevant un oeuf à la fois et tous les dispositifs de décoquillage étant montés sur un convoyeur de décoquillage (6), dans lequel les dispositifs de décoquillage sont déplacés par rapport au convoyeur d'alimentation d'oeufs en coquille dans une première direction suivant un premier axe sensiblement vertical (A) à proximité de la seconde extrémité du convoyeur d'alimentation d'oeufs en coquille,
**caractérisé en ce que** le convoyeur d'alimentation d'oeufs en coquille (5) est entraîné par une première transmission et le convoyeur de décoquillage (6) est entraîné par une seconde transmission, et **en ce que** la position de la première transmission et/ou la position de la seconde transmission est (sont) réglée(s) en réponse à des variations de la vitesse d'au moins un convoyeur parmi le convoyeur d'alimentation d'oeufs en coquille et le convoyeur de décoquillage.

2. Procédé selon la revendication 1, **caractérisé en ce que** le réglage de la première transmission et/ou de la seconde transmission est exécuté automatiquement par une unité de commande.

3. Procédé selon la revendication 2, **caractérisé en ce que** l'unité de commande reçoit des informations relatives aux positions à la fois de la première transmission et de la seconde transmission, **en ce que** la nécessité de procéder à un réglage de l'une ou de chacune des deux transmissions est calculée par l'unité de commande sur la base de ces informations, et **en ce que**, si un réglage est nécessaire, l'unité de commande envoie des signaux de commande à la première transmission et/ou à la seconde transmission.

4. Procédé selon l'une quelconque des revendications précédentes, **caractérisé en ce qu'**une entrée en provenance de codeurs sur un ou plusieurs moteur(s) d'entraînement est utilisée pour le réglage de la première transmission et/ou de la seconde transmission.

5. Procédé selon l'une quelconque des revendications précédentes, **caractérisé en ce qu'**une entrée en provenance de capteurs agencés sur des chaînes et/ou des courroies transmettant une force de la première transmission au convoyeur d'alimentation d'oeufs en coquille (5) et/ou de la seconde transmission au convoyeur de décoquillage (6), respectivement, est utilisée pour le réglage de la première transmission et/ou de la seconde transmission.

6. Procédé selon l'une quelconque des revendications précédentes, **caractérisé en ce que** le réglage de la position d'une ou de chacune des deux transmissions est exécuté de façon régulière ou continue, lorsque l'appareil de décoquillage (1) fonctionne.

7. Procédé selon l'une quelconque des revendications précédentes, **caractérisé en ce que** la taille et/ou une variation de la taille des oeufs conduits à l'appareil de décoquillage (1) est prise en compte dans le réglage de la position de la première transmission et/ou de la seconde transmission.

8. Procédé selon l'une quelconque des revendications précédentes, **caractérisé en ce que** la première transmission et/ou la seconde transmission comprend un servomoteur ou un moteur entraîné en mode asservi.

9. Procédé selon l'une quelconque des revendications précédentes, **caractérisé en ce que** lorsque, à proximité d'une position au niveau du convoyeur d'alimentation d'oeufs en coquille (5), les dispositifs de décoquillage (10) sont inclinés autour d'un second axe, qui est sensiblement perpendiculaire au premier axe (A) et à la direction de transport (S) du convoyeur d'alimentation d'oeufs en coquille, dans une seconde direction sensiblement opposée à ladite première direction, de préférence avec une vitesse correspondant sensiblement à une différence entre la vitesse des oeufs quittant le convoyeur d'alimentation d'oeufs en coquille (5) et la vitesse du convoyeur de décoquillage (6).

10. Procédé selon la revendication 9, **caractérisé en ce que** l'inclinaison d'un dispositif de décoquillage (10) est exécutée sensiblement simultanément à la réception d'un oeuf à partir du convoyeur d'alimentation d'oeufs en coquille (5).

11. Appareil de décoquillage (1), comprenant:
une pluralité de dispositifs de décoquillage (10) capables chacun de recevoir un oeuf à la fois et étant tous montés sur un convoyeur de décoquillage (6),
un convoyeur d'alimentation d'oeufs en coquille (5) pour acheminer des oeufs jusqu'aux dispositifs de décoquillage, ledit convoyeur d'alimentation d'oeufs en coquille présentant une première extrémité et une seconde extrémité opposée à la première extrémité dans la direction (S) de transport du convoyeur d'alimentation d'oeufs en coquille, dans lequel des oeufs peuvent avancer au-delà du convoyeur d'alimentation d'oeufs en coquille pour être transférés aux dispositifs de décoquillage,
au moins un dispositif de réception d'oeufs,
dans lequel les dispositifs de décoquillage sont déplaçables par rapport au convoyeur d'alimentation d'oeufs en coquille dans une première direction suivant un premier axe sensiblement vertical à proximité de la seconde extrémité du convoyeur d'alimentation d'oeufs en coquille,
**caractérisé en ce qu'**il comprend en outre une première transmission adaptée pour entraîner le convoyeur d'alimentation d'oeufs en coquille (5), une seconde transmission adaptée pour entraîner le convoyeur de décoquillage (6), et une unité de commande pour régler la position de la première transmission et/ou la position de la seconde transmission en réponse à des variations de la vitesse d'au moins un convoyeur parmi le convoyeur d'alimentation d'oeufs en coquille et le convoyeur de décoquillage.

12. Appareil de décoquillage selon la revendication 11, **caractérisé en ce qu'**au moins un moteur (20, 21) de la première transmission et/ou de la seconde transmission est pourvu d'un codeur, et **en ce que** l'unité de commande est adaptée pour recevoir des informations relatives à la position du moteur en provenance du codeur et pour utiliser ces informations pour régler la position de l'autre transmission.

13. Appareil de décoquillage selon la revendication 11 ou 12, **caractérisé en ce que** l'unité de commande comprend un ordinateur programmé pour calculer des réglages de position et une unité de communication adaptée pour communiquer avec la première transmission et/ou la seconde transmission.

14. Appareil de décoquillage selon l'une quelconque des revendications 11 à 13, **caractérisé en ce que** l'unité de commande est adaptée pour recevoir des informations relatives à la taille et/ou à une variation de la taille des oeufs conduits à l'appareil de décoquillage et pour tenir compte de ces informations lors du réglage de la position de la première transmission et/ou de la seconde transmission.

15. Appareil de décoquillage selon l'une quelconque des revendications 11 à 14, **caractérisé en ce que** la première transmission et/ou la seconde transmission est (sont) un servomoteur ou un moteur entraîné en mode asservi.
